(19) Europäisches Patentamt / European Patent Office / Office européen des brevets

(11) **EP 4 401 013 B1**

(12) **EUROPEAN PATENT SPECIFICATION**

(45) Date of publication and mention of the grant of the patent:
**22.10.2025 Bulletin 2025/43**

(21) Application number: **21961397.3**

(22) Date of filing: **21.10.2021**

(51) International Patent Classification (IPC):
**G06Q 10/04** (2023.01)    **G06Q 50/40** (2024.01)
**G08G 1/01** (2006.01)    **G06N 20/00** (2019.01)

(52) Cooperative Patent Classification (CPC):
**G06Q 50/40; G06N 20/00; G06Q 10/04;**
**G08G 1/0112; G08G 1/0116; G08G 1/0129;**
**G08G 1/0133; G08G 1/0141**

(86) International application number:
**PCT/JP2021/038860**

(87) International publication number:
**WO 2023/067745 (27.04.2023 Gazette 2023/17)**

(54) **TRAINING DEVICE, PREDICTION DEVICE, TRAINING PREDICTION DEVICE, PROGRAM, TRAINING METHOD, PREDICTION METHOD, AND TRAINING PREDICTION METHOD**

TRAININGSVORRICHTUNG, VORHERSAGEVORRICHTUNG, TRAININGSVORHERSAGEVORRICHTUNG, PROGRAMM, TRAININGSVERFAHREN, VORHERSAGEVERFAHREN UND TRAININGSVORHERSAGEVERFAHREN

DISPOSITIF D'ENTRAÎNEMENT, DISPOSITIF DE PRÉDICTION, DISPOSITIF DE PRÉDICTION D'ENTRAÎNEMENT, PROGRAMME, PROCÉDÉ D'ENTRAÎNEMENT, PROCÉDÉ DE PRÉDICTION ET PROCÉDÉ DE PRÉDICTION D'ENTRAÎNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.07.2024 Bulletin 2024/29**

(73) Proprietor: **MITSUBISHI ELECTRIC CORPORATION**
**Chiyoda-ku**
**Tokyo 100-8310 (JP)**

(72) Inventor: **ITO Daishin**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**JP-A- 2009 146 252        US-A1- 2016 124 906**
**US-A1- 2016 124 906**

- **PENG XIE ET AL: "Urban flows prediction from spatial-temporal data using machine learning: A survey", ARXIV.ORG, CORNELL UNIVERSITY LIBRARY, 201 OLIN LIBRARY CORNELL UNIVERSITY ITHACA, NY 14853, 26 August 2019 (2019-08-26), XP081470584**
- **P RAPHIPHAN ; P PRATHOMBUTR ; A ZASLAVSKY ; P MEESAD: "Real time traffic congestion degree computation for minor sensorless roads using cost efficient context reasoning", INTELLIGENT TRANSPORTATION SYSTEMS (ITSC), 2010 13TH INTERNATIONAL IEEE CONFERENCE ON, IEEE, PISCATAWAY, NJ, USA, 19 September 2010 (2010-09-19), Piscataway, NJ, USA , pages 1741 - 1746, XP031792756, ISBN: 978-1-4244-7657-2**

Description

## TECHNICAL FIELD

The disclosure relates to a learning device, a prediction device, a learning method, and a prediction method.

## BACKGROUND ART

In recent years, attempts have been made to encourage users to act to avoid congestion by predicting future congestion levels on station platforms or concourses and presenting the congestion levels. Accordingly, techniques have been proposed for estimating the congestion level or the flow of people on station platforms or concourses.

In order to estimate the congestion level or the like, it is desirable to place sensors in all areas to be estimated. However, it is difficult to install sensors in all areas due to cost and operational difficulties.

Accordingly, Patent Literature 1 discloses a means for estimating congestion levels or flow of people in places where sensors are not installed that considers the dynamic causal relationship between timetable information and sensors when the level of congestion or flow of people on a station platform or a concourse is to be estimated.

Non-Patent Literature 1 discloses a survey of different methods of urban flow prediction.

## PRIOR ART REFERENCE

## PATENT REFERENCE

Patent Literature 1: Japanese Patent Application No. 2013-116676

US2016124906 discloses a method of creating a computerized model for computing values representative of traffic congestion in respect of a geographic area for use in representing a degree of traffic congestion in the geographic area using a limited number of symbols, the method comprising: retrieving, by at least one server from at least one database, historical traffic data in respect of roads within geographic area, the retrieved historical traffic data including data over a course of a first period of time in respect of second periods of time within the first period of time; retrieving, by the at least one server from the at least database, values representative of traffic congestion in respect of roads within the geographic area for the second periods of time; and deriving, via the at least one server, a computerized model for computing values representative of traffic congestion in respect of roads within the geographic area for third periods of time, the computerized model being based on the retrieved historical traffic data and the retrieved values representative of traffic congestion in respect of the geographic area for the second periods of time.

## NON-PATENT REFERENCE

Non-Patent Literature 1: Peng Xie, Tianrui Li, Shengdong Du, Xin Yang, Junbo Zhang, "Urban flows prediction from spatial-temporal data using machine learning: A survey" in arXiv.org, 26 August 2019.

## SUMMARY OF THE INVENTION

## PROBLEM TO BE SOLVED BY THE INVENTION

However, the conventional technique only predicts and presents the current congestion level at a station or in a train car, etc., to users who are already at the station. Since the users do not know the congestion level in the future, they cannot take action to avoid future congestion. Thus, the level of satisfaction decreases for future users who are about to head to train stations, etc.

Accordingly, it is an object of one or more aspects of the disclosure to enable prediction of future congestion in areas where sensors are not installed.

## MEANS OF SOLVING THE PROBLEM

A learning device according to a first aspect of the disclosure includes: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the values indicated by the past sensor data as input data and using the congestion-related information indicated by the past congestion-area data as correct data, the first model being a learning model for predicting, from values detected by the one or more sensors, congestion-related information of a time point at which the one or more sensors perform detection; and a second-model generating unit configured to generate a second model by using the congestion-related information of a first time point indicated by the past congestion-area data as input data and using the congestion level in the congestion-related information of a second time point indicated by the past congestion-area data as correct data, the second model being a learning model for predicting a future congestion level from the congestion-related information, the second time point being a time point after the first time point.

A learning device according to a second aspect of the disclosure includes: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the congestion-related information indicated by the past congestion-area data as input data and using the values indicated by the past sensor data as correct data, the first model being a learning model for predicting, from the congestion-related information, values to be detected by the one or more sensors at a time point at which the congestion-related information is acquired; a model applying unit configured to use the first model to predict, from the congestion-related information at a first time point indicated by the past congestion-area data, values to be detected by the one or more sensors at the first time point; and a second-model generating unit configured to generate a second model by using the predicted values as input data and using the congestion level in the congestion-related information of a second time point indicated by the past congestion-area data as correct data, the second model being a learning model for predicting a future congestion level from values detected by the one or more sensors, the second time point being a time point after the first time point.

A prediction device according to a first aspect of the disclosure includes: an acquiring unit configured to acquires values detected by one or more sensors installed in n areas (where n is an integer of one or more, and n<m) out of m areas (where m is an integer of two or more); a first predicting unit configured to use a first model to predict, from the acquired values, congestion-related information of a time point at which one or more sensors perform detection, the first model being a learning model for predicting, from values to be detected by the one or more sensors, the congestion-related information of the time point at which the one or more sensors perform detection, the first model being generated by using values indicated by past sensor data indicating the values detected in the past by the one or more sensors installed in n areas (where n is an integer of one or more and n<m) out of the m areas as input data and using the congestion-related information indicated by past congestion-area data indicating the congestion-related information including a past congestion level of each of the m areas as correct data; and a second predicting unit configured to use a second model to predict, from the predicted congestion-related information, a future congestion level of any of the m areas, the second model being a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

A prediction device according to a second aspect includes: an acquiring unit configured to acquire values detected by one or more sensors installed in n areas (where n is an integer of one or more, and n<m) out of m areas (where m is an integer of two or more); and a prediction executing unit configured to use a second model to predict a future congestion level of any of the m areas from the acquired values, the first model being a learning model for predicting, from congestion-related information, values to be detected by the one or more sensors at a time point at which the congestion-related information is acquired, the first model being generated by using, as input data, the congestion-related information indicated by past congestion-area data indicating the congestion-related information including a past congestion level of each of the m areas and by using, as correct data, values indicated by past sensor data indicating values detected by the one or more sensors in the past, the second model being a learning model for predicting a future congestion level from the values detected by the one or more sensors, the second model being generated by using, as input data, predicted values obtained by using a first model to predict the values to be detected by the one or more sensors at a first time point, from congestion-related information of the first time point indicated by the past congestion-area data and by using, as correct data, a congestion level in the congestion-related information of a second time point indicated by the past congestion-area data, the second time point being a time point after the first time point.

A learning prediction device according to a first aspect includes: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the values indicated by the past sensor data as input data and using the congestion-related information indicated by the past congestion-area data as correct data, the first model being a learning model for predicting, from values detected by the one or more sensors, congestion-related information of a time point at which the one or more sensors perform detection; a second-model generating unit configured to generate a second model by using the congestion-related information of a first time point indicated by the past congestion-area data as input data and using the congestion level in the congestion-related information of a second time point indicated by the past congestion-area data as correct data, the second model being a learning model for predicting a future congestion level from the congestion-related information, the second time point being a time point after the first time point; an acquiring unit configured to acquire values detected by the one or more sensors; a first predicting unit configured to use the first model to predict, from the acquired values, the congestion-related information of a time point at which the one or more sensors perform detection; and a second predicting unit configured to use the second model to predict, from the predicted congestion-related information, a future congestion level of any of the m areas.

A learning prediction device according to a second aspect includes: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the congestion-related information indicated by the past congestion-area data as input data and using the values indicated by the past sensor data as correct data, the first model being a learning model for predicting, from the congestion-related information, values to be detected by the one or more sensors at a time point at which the congestion-related information is acquired; a first predicting unit configured to use the first model to predict, from the congestion-related information at a first time point indicated by the past congestion-area data, values to be detected by the one or more sensors at the first time point; a second-model generating unit configured to generate a second model by using the predicted values as input data and using the congestion level in the congestion-related information of a second time point indicated by the past congestion-area data as correct data, the second model being a learning model for predicting a future congestion level from the values detected by the one or more sensors, the second time point being a time point after the first time point; an acquiring unit configured to acquire the values detected by the one or more sensors; and a second predicting unit configured to use the second model to predict, from the acquired values, a future congestion level of any of the m areas.

A program according to a first aspect of the disclosure that causes a computer to function as: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the values indicated by the past sensor data as input data and using the congestion-related information indicated by the past congestion-area data as correct data, the first model being a learning model for predicting, from values detected by the one or more sensors, congestion-related information of a time point at which the one or more sensors perform detection; and a second-model generating unit configured to generate a second model by using the congestion-related information of a first time point indicated by the past congestion-area data as input data and using the congestion level in the congestion-related information of a second time point indicated by the past congestion-area data as correct data, the second model being a learning model for predicting a future congestion level from the congestion-related information, the second time point being a time point after the first time point.

A program according to a second aspect of the disclosure that causes a computer to function as: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the congestion-related information indicated by the past congestion-area data as input data and using the values indicated by the past sensor data as correct data, the first model being a learning model for predicting, from the congestion-related information, values to be detected by the one or more sensors at a time point at which the congestion-related information is acquired; a model applying unit configured to use the first model to predict, from the congestion-related information at a first time point indicated by the past congestion-area data, values to be detected by the one or more sensors at the first time point; and a second-model generating unit configured to generate a second model by using the predicted values as input data and using the congestion level in the congestion-related information of a second time point indicated by the past congestion-area data as correct data, the second model being a learning model for predicting a future congestion level from values detected by the one or more sensors, the second time point being a time point after the first time point.

A program according to a third aspect of the disclosure that causes a computer to function as: an acquiring unit configured to acquire values detected by one or more sensors installed in n areas (where n is an integer of one or more, and n<m) out of m areas (where m is an integer of two or more); a first predicting unit configured to use a first model to predict, from the acquired values, congestion-related information of a time point at which one or more sensors perform detection, the first model being a learning model for predicting, from values to be detected by the one or more sensors, the congestion-related information of the time point at which the one or more sensors perform detection, the first model being generated by using values indicated by past sensor data indicating the values detected in the past by the one or more sensors installed in n areas (where n is an integer of one or more and n<m) out of the m areas as input data and using the congestion-related information indicated by past congestion-area data indicating the congestion-related information including a past congestion level of each of the m areas as correct data; and a second predicting unit configured to use a second model to predict, from the predicted congestion-related information, a future congestion level of any of the m areas, the second model being a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

A program according to a fourth aspect of the disclosure that causes a computer to function as: an acquiring unit configured to acquire values detected by one or more sensors installed in n areas (where n is an integer of one or more, and n<m) out of m areas (where m is an integer of two or more); and a prediction executing unit configured to use a second model to predict a future congestion level of any of the m areas from the acquired values, the first model being a learning model for predicting, from congestion-related information, values to be detected by the one or more sensors at a time point at which the congestion-related information is acquired, the first model being generated by using, as input data, the congestion-related information indicated by past congestion-area data indicating the congestion-related information including a past congestion level of each of the m areas and by using, as correct data, values indicated by past sensor data indicating values detected by the one or more sensors in the past, the second model being a learning model for predicting a future congestion level from the values detected by the one or more sensors, the second model being generated by using, as input data, predicted values obtained by using a first model to predict the values to be detected by the one or more sensors at a first time point, from congestion-related information of the first time point indicated by the past congestion-area data and by using, as correct data, a congestion level in the congestion-related information of a second time point indicated by the past congestion-area data, the second time point being a time point after the first time point.

A program according to a fifth aspect of the disclosure that causes a computer to function as: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the values indicated by the past sensor data as input data and using the congestion-related information indicated by the past congestion-area data as correct data, the first model being a learning model for predicting, from values detected by the one or more sensors, congestion-related information of a time point at which the one or more sensors perform detection; a second-model generating unit configured to generate a second model by using the congestion-related information of a first time point indicated by the past congestion-area data as input data and using the congestion level in the congestion-related information of a second time point indicated by the past congestion-area data as correct data, the second model being a learning model for predicting a future congestion level from the congestion-related information, the second time point being a time point after the first time point; an acquiring unit configured to acquire the values detected by the one or more sensors; a first predicting unit configured to use the first model to predict, from the acquired values, the congestion-related information of a time point at which the one or more sensors perform detection; and a second predicting unit configured to use the second model to predict, from the predicted congestion-related information, a future congestion level of any of the m areas.

A program according to a sixth aspect of the disclosure that causes a computer to function as: a past-congestion-area-data storage unit configured to store past congestion-area data indicating congestion-related information including a past congestion level of each of m areas (where m is an integer of two or more); a past-sensor-data storage unit configured to store past sensor data indicating values detected in the past by one or more sensors installed in n areas (where n is an integer of one or more and n<m) out of the m areas; a first-model generating unit configured to generate a first model by using the congestion-related information indicated by the past congestion-area data as input data and using the values indicated by the past sensor data as correct data, the first model being a learning model for predicting, from the congestion-related information, values to be detected by the one or more sensors at a time point at which the congestion-related information is acquired; a first predicting unit configured to use the first model to predict, from the congestion-related information at a first time point indicated by the past congestion-area data, values to be detected by the one or more sensors at the first time point; a second-model generating unit configured to generate a second model by using the predicted values as input data and using the congestion level in the congestion-related information of a second time point indicated by the past congestion-area data as correct data, the second model being a learning model for predicting a future congestion level from the values detected by the one or more sensors, the second time point being a time point after the first time point; an acquiring unit configured to acquire the values detected by the one or more sensors; and a second predicting unit configured to use the second model to predict, from the acquired values, a future congestion level of any of the m areas.

**EP 4 401 013 B1**

A learning method according to a first aspect of the disclosure includes: generating a first model that is a learning model for predicting, from values detected by one or more sensors, congestion-related information of a time point at which the one or more sensors perform detection, the first model being generated by using values indicated by past sensor data indicating the values detected in the past by the one or more sensors installed in n areas (where n is an integer of one or more and n<m) out of m areas (where m is an integer of two or more) as input data and using the congestion-related information indicated by past congestion-area data indicating the congestion-related information including a past congestion level of each of the m areas as correct data; and generating a second model that is a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

A learning method according to a second aspect of the disclosure includes: generating a first model by using, as input data, the congestion-related information indicated by past congestion-area data indicating the congestion-related information including a past congestion level of each of m areas (where m is an integer of two or more) and using, as correct data, values indicated by past sensor data indicating the values detected in the past by the one or more sensors installed in n areas (where n is an integer of one or more and n<m) out of the m areas, the first model being a learning model for predicting, from congestion-related information, values to be detected by one or more sensors of a time point at which the congestion-related information is acquired; using the first model to predict, from the congestion-related information at a first time point indicated by the past congestion-area data, values to be detected by the one or more sensors at the first time point; and generating a second model by using the predicted values as input data and using the congestion level in the congestion-related information of a second time point indicated by the past congestion-area data as correct data, the second model being a learning model for predicting a future congestion level from values detected by the one or more sensors, the second time point being a time point after the first time point.

A prediction method according to a first aspect includes: acquiring values detected by one or more sensors installed in n areas (where n is an integer of one or more, and n<m) out of m areas (where m is an integer of two or more); using a first model to predict, from the acquired values, congestion-related information of a time point at which one or more sensors perform detection, the first model being a learning model for predicting, from values to be detected by the one or more sensors, the congestion-related information of the time point at which the one or more sensors perform detection, the first model being generated by using values indicated by past sensor data indicating the values detected in the past by the one or more sensors installed in n areas (where n is an integer of one or more and n<m) out of the m areas as input data and using the congestion-related information indicated by past congestion-area data indicating the congestion-related information including a past congestion level of each of the m areas as correct data; and using a second model to predict, from the predicted congestion-related information, a future congestion level of any of the m areas, the second model being a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

A prediction method according to a second aspect of the disclosure includes: acquiring values detected by one or more sensors installed in n areas (where n is an integer of one or more, and n<m) out of m areas (where m is an integer of two or more); and using a second model to predict a future congestion level of any of the m areas from the acquired values, the first model being a learning model for predicting, from congestion-related information, values to be detected by the one or more sensors at a time point at which the congestion-related information is acquired, the first model being generated by using, as input data, the congestion-related information indicated by past congestion-area data indicating the congestion-related information including a past congestion level of each of the m areas and by using, as correct data, values indicated by past sensor data indicating values detected by the one or more sensors in the past, the second model being a learning model for predicting a future congestion level from the values detected by the one or more sensors, the second model being generated by using, as input data, predicted values obtained by using a first model to predict the values to be detected by the one or more sensors at a first time point, from congestion-related information of the first time point indicated by the past congestion-area data and by using, as correct data, a congestion level in the congestion-related information of a second time point indicated by the past congestion-area data, the second time point being a time point after the first time point.

A learning prediction method according to a first aspect includes: generating a first model that is a learning model for predicting, from values detected by one or more sensors, congestion-related information of a time point at which the one or more sensors perform detection, the first model being generated by using values indicated by past sensor data indicating the values detected in the past by the one or more sensors installed in n areas (where n is an integer of one or more and n<m) out of m areas (where m is an integer of two or more) as input data and using the congestion-related information indicated by past congestion-area data indicating the congestion-related information including a past congestion level of each of the m areas as correct data; generating a second model that is a learning model for predicting

6

a future congestion level from the congestion-related information, the second model being generated by using the congestion-related information of a first time point indicated by the past congestion-area data as input data and using the congestion level in the congestion-related information of a second time point as correct data, the second time point being a time point after the first time point; an acquiring unit configured to acquire values detected by the one or more sensors; using the first model to predict, from the acquired values, the congestion-related information of a time point at which the one or more sensors perform detection; and using the second model to predict, from the predicted congestion-related information, a future congestion level of any of the m areas.

A learning prediction method according to a second aspect include: generating a first model that is a learning model for predicting, from congestion-related information, values to be detected by one or more sensors of a time point at which the congestion-related information is acquired, the first model being generated by using, as input data, the congestion-related information indicated by past congestion-area data indicating the congestion-related information including a past congestion level of each of m areas (where m is an integer of two or more) and using, as correct data, values indicated by past sensor data indicating the values detected in the past by the one or more sensors installed in n areas (where n is an integer of one or more and n<m) out of the m areas; using the first model to predict, from the congestion-related information at a first time point indicated by the past congestion-area data, values to be detected by the one or more sensors at the first time point; generating a second model that is a learning model for predicting a future congestion level from values detected by the one or more sensors, the second model being generated by using the predicted values as input data and using the congestion level in the congestion-related information of a second time point indicated by the past congestion-area data as correct data, the second time point being a time point after the first time point; an acquiring unit configured to acquire values detected by the one or more sensors; and using the second model to predict, from the acquired values, a future congestion level of any of the m areas.

## EFFECTS OF THE INVENTION

According to one or more aspects of the disclosure, it is possible to predict future congestion in areas where sensors are not installed.

## BRIEF DESCRIPTION OF THE DRAWINGS

FIG. 1 is a block diagram schematically illustrating a configuration of a congestion prediction system according to first and second embodiments.
FIG. 2 is a schematic diagram describing areas for which congestion is to be predicted and installation positions of sensors in the congestion prediction system.
FIG. 3 is a block diagram schematically illustrating a configuration of the congestion prediction device according to the first embodiment.
FIG. 4 is a schematic diagram illustrating an example of past congestion-area data.
FIG. 5 is a schematic diagram illustrating an example of past sensor data.
FIG. 6 is a block diagram schematically illustrating a configuration of a computer.
FIG. 7 is a flow chart illustrating an example of a correction-model generation process according to the first embodiment.
FIG. 8 is a flow chart illustrating an example of a prediction-model learning process according to the first embodiment.
FIG. 9 is a flow chart illustrating an example of a prediction process according to the first embodiment.
FIGS. 10A and 10B are schematic diagrams for explaining past congestion-level data and real-time congestion-level data.
FIG. 11 is a block diagram schematically illustrating a configuration of a congestion prediction device according to a second embodiment.
FIG. 12 is a schematic diagram for explaining a process executed by the congestion prediction device according to the second embodiment.

## MODE FOR CARRYING OUT THE INVENTION

## FIRST EMBODIMENT

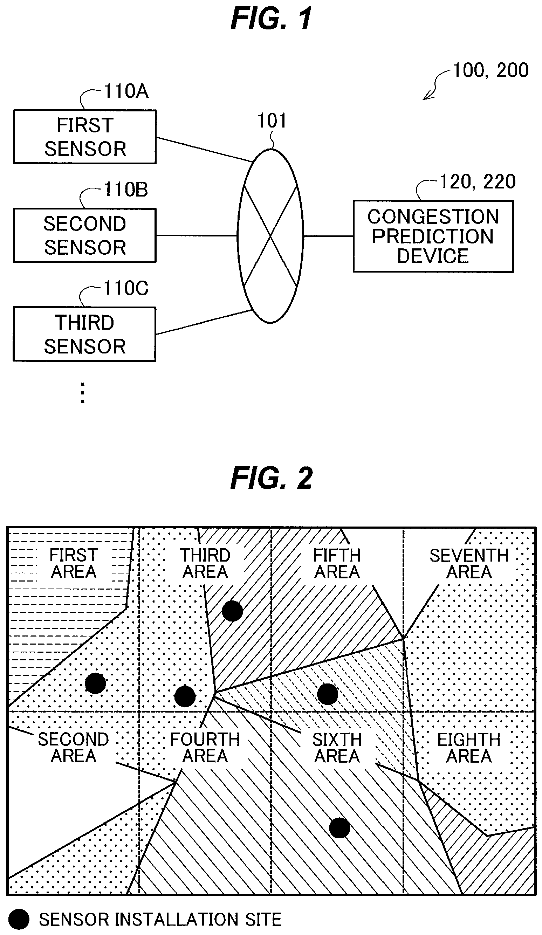

FIG. 1 is a block diagram schematically illustrating a configuration of a congestion prediction system 100 according to the first embodiment.
The congestion prediction system 100 includes a first sensor 110A, a second sensor 110B, a third sensor 110C,...

and a congestion prediction device 120.

The first sensor 110A, the second sensor 110B, the third sensor 110C,... and the congestion prediction device 120 are connected to, for example, a network 101, such as the Internet, and sensor data indicating values detected by the first sensor 110A, the second sensor 110B, the third sensor 110C,... is transmitted to the congestion prediction device 120.

When there is no particular need to distinguish between the first sensor 110A, the second sensor 110B, and the third sensor 110C, any one of the first sensor 110A, the second sensor 110B, and the third sensor 110C is referred to as a "sensor 110."

In FIG. 1, three sensors 110 are illustrated, but it is sufficient to have at least one sensor 110.

The sensors 110 include a congestion sensor that acquires congestion data on a target space and an external sensor that acquires external data relating to the target space.

Congestion data is, for example, imaging data captured by a camera, point cloud data indicating a point cloud detected by a laser, or infrared imaging data detected by an infrared sensor. It is assumed that congestion data is obtained by analyzing such data with the congestion prediction device 120 or another device to specify the number of people included in the congestion data.

External data is, for example, data representing physical quantities, such as temperature, air temperature, wind speed, atmospheric pressure, or precipitation at a representative point or radio wave strengths of wireless access points within or around the target space. External data is not limited to data representing the above physical quantities; for example, it may be data such as special operation information of public transportation within or around the target space, or data representing the implementation status of events relating to the target space.

FIG. 2 is a schematic diagram describing areas for which congestion is to be predicted and installation positions of the sensors 110 in the congestion prediction system 100.

In the first embodiment, congestion is to be predicted in m areas (m is an integer of two or more). The sensors 110 are installed in n areas (n is an integer of one or more, and n<m).

For example, as illustrated in FIG. 2, the congestion prediction system 100 predicts the congestion levels of first to eighth areas. It is ideal to provide a sensor 110 in each of the first to eighth areas; however, as illustrated in FIG. 2, it is assumed that the sensors 110 are provided only in the first, third, fifth, and sixth areas due to cost or other factors. In this example, m=8 and n=4.

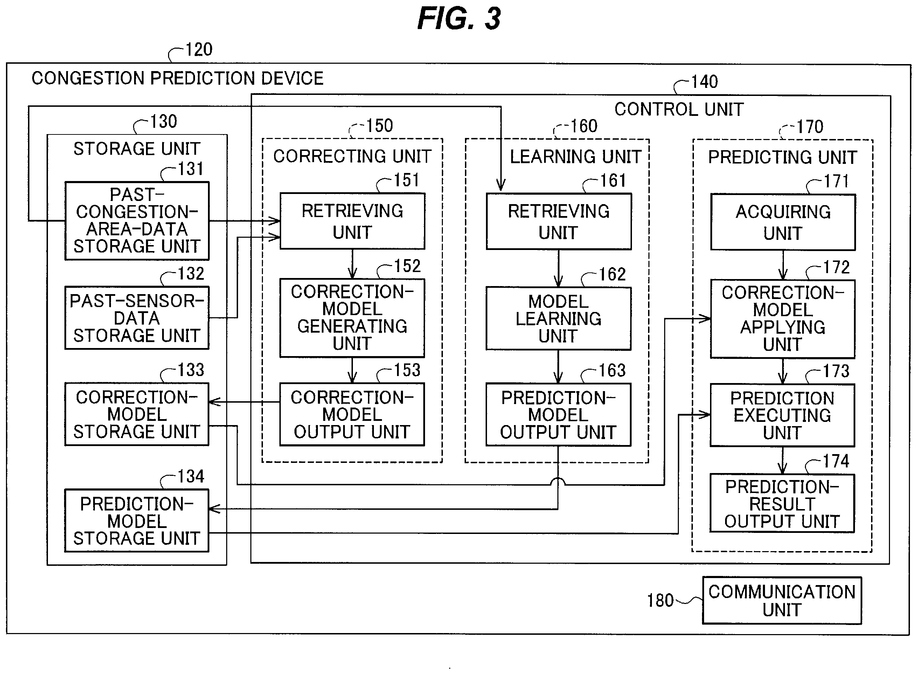

FIG. 3 is a block diagram schematically illustrating a configuration of the congestion prediction device 120 according to the first embodiment.

The congestion prediction device 120 includes a storage unit 130, a control unit 140, and a communication unit 180.

The control unit 140 includes a correcting unit 150, a learning unit 160, and a predicting unit 170.

The congestion prediction device 120 generates a model based on past congestion-area data indicating congestion-related information, such as congestion information, weather information, and event information of each area in the past, and past sensor data, which is sensor data acquired in the past by the sensors 110 installed in any of the areas, and performs prediction based on current sensor data by using the generated model.

In other words, the congestion prediction device 120 functions as a learning device that learns a learning model, a prediction device that performs prediction by using a learning model, and a learning prediction device that performs both learning and prediction.

The storage unit 130 includes a past-congestion-area-data storage unit 131, a past-sensor-data storage unit 132, a correction-model storage unit 133, and a prediction-model storage unit 134.

The past-congestion-area-data storage unit 131 stores past congestion-area data indicating congestion-related information, which is information relating to past congestion of each of the m areas. The congestion-related information includes past congestion levels of each of the m areas.

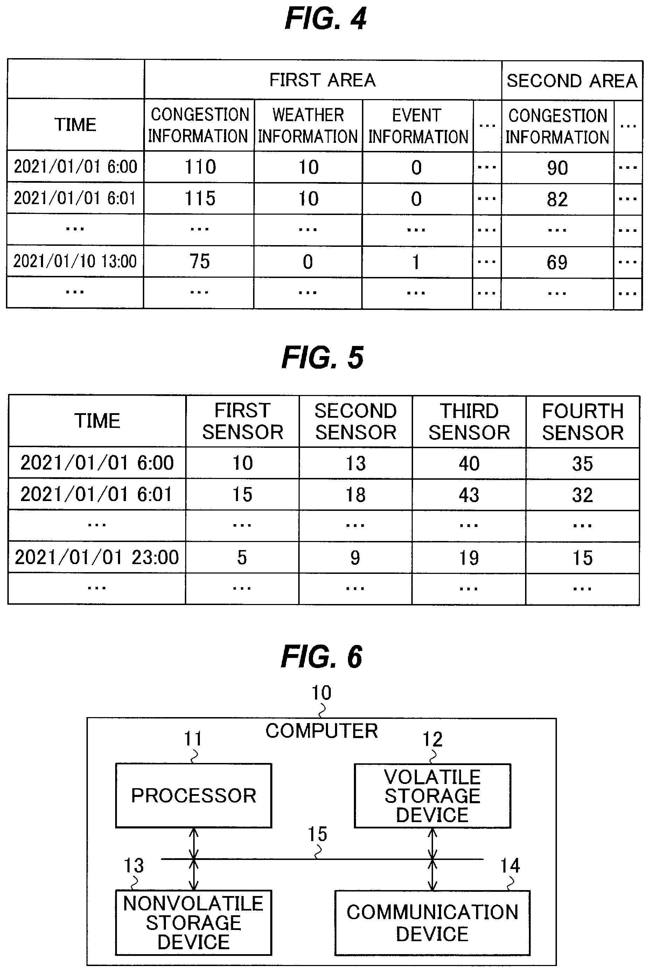

FIG. 4 is a schematic diagram illustrating an example of past congestion-area data.

The past congestion-area data illustrated in FIG. 4 represents congestion information, weather information, and event information of each area at each time point.

Congestion information is information indicating the congestion level of an area. For example, congestion information indicates a congestion level that is a numerical value indicating the state of congestion within an area, such as the number of people staying within the area or a congestion rank determined by a certain standard.

For an area where a congestion sensor is installed, congestion information should be generated from congestion data acquired by the congestion sensor.

For an area where no congestion sensor is installed, congestion information should be generated on the basis of information acquired by another device or information inputted by an operator.

Weather information is information indicating the weather in an area. For example, weather information is a numerical value relating to the weather in an area, such as precipitation, probability of precipitation, humidity, temperature, or wind speed within the area.

Event information is information relating to events in an area. For example, event information is a numerical value relating to events in an area, such as the number of visitors to an event held within the area or a flag indicating whether or not an event is held within the area.

For a region where an external sensor is installed, at least one of weather information and event information should be generated from the external data acquired by the external sensor.

For a region where no external sensor is installed, at least one of weather information and event information should be generated on the basis of information acquired by another device or information inputted by an operator.

As described above, past congestion-area data provides information relating to congestion at each time point.

Referring back to FIG. 3, the past-sensor-data storage unit 132 stores past sensor data indicating values detected in the past with one or more sensors installed in n areas out of the m areas.

FIG. 5 is a schematic diagram illustrating an example of past sensor data.

The past sensor data illustrated in FIG. 5 indicates values detected by the sensors 110 at each time point.

Referring back to FIG. 3, the correction-model storage unit 133 stores a correction model, which is a learning model for predicting, from values detected by the sensors 110, congestion-related information at the time points at which the sensors 110 detect the values.

The prediction-model storage unit 134 stores a prediction model, which is a learning model for predicting future congestion levels on the basis of the congestion-related information.

The correcting unit 150 of the control unit 140 includes a retrieving unit 151, a correction-model generating unit 152, and a correction-model output unit 153.

The retrieving unit 151 retrieves, from past congestion-area data and past sensor data, values that are data included in overlapping time periods. The retrieved values are given to the correction-model generating unit 152.

The correction-model generating unit 152 functions as a first-model generating unit that generates a first model that is a learning model for predicting, from the values detected by the one or more sensors 110, congestion-related information at time points at which the one or more sensors 110 have performed detection, while using the values indicated by the past sensor data as input data and the congestion-related information indicated by the past congestion-area data as correct data.

For example, the correction-model generating unit 152 learns the first model by using the values of certain time points detected by the sensors 110 as input data and congestion-related information of these time points as correct data.

Here, the correction-model generating unit 152 uses the values retrieved by the retrieving unit 151 to generate the correction model as the first model for predicting congestion-related information from the values detected by the sensors 110. The generated correction model is given to the correction-model output unit 153.

The correction-model output unit 153 stores the learning model generated by the correction-model generating unit 152 in the correction-model storage unit 133.

The learning unit 160 of the control unit 140 includes a retrieving unit 161, a model learning unit 162, and a prediction-model output unit 163.

The retrieving unit 161 retrieves the past congestion-area data from the past-congestion-area-data storage unit 131. The retrieved past congestion-area data is given to the model learning unit 162.

The model learning unit 162 functions as a second-model generating unit that generates a second model, which is a learning model for predicting future congestion levels from the congestion-related information of past congestion-area data by using the congestion-related information of a first time point as input data and the congestion levels at a second time point, which is a time point after the first time point, as correct data.

For example, the model learning unit 162 learns the second model by using one or more pieces of congestion-related information in one or more regions included in one or more time zones as input data and using the congestion level of one area out of the m areas at a time after the one or more time zones as correct data.

Specifically, the model learning unit 162 can learn a prediction model that can predict the congestion levels of the first area 30 minutes in the future by using the congestion-related information in all areas from 13:00 to 14:00 on one day as input data and the congestion levels indicated by the congestion information in the congestion-related information of the first area at 14:30 on the same day as correction data. Here, the congestion-related information of all areas is used as input data, but it is also sufficient to use only congestion-related information of areas for which future congestion levels are to be predicted as input data, or only congestion-related information of one or more areas selected from all the areas as input data.

Here, the model learning unit 162 uses the past congestion-area data to generate a prediction model, or a second model, for predicting future congestion levels from the congestion-related information. The generated prediction model is given to the prediction-model output unit 163.

The prediction-model output unit 163 stores the prediction model generated by the model learning unit 162 in the prediction-model storage unit 134.

The predicting unit 170 of the control unit 140 includes an acquiring unit 171, a correction-model applying unit 172, a prediction executing unit 173, and a prediction-result output unit 174.

The acquiring unit 171 acquires detected values from the sensors 110 via the communication unit 180. Data indicating the values acquired here is also referred to as real sensor data. The real sensor data is given to the correction-model applying unit 172.

The correction-model applying unit 172 functions as a first predicting unit that uses the correction model to predict, from the values acquired by the acquiring unit 171, the congestion-related information of the time points at which the sensors 110 have performed detection.

Here, the correction-model applying unit 172 accumulates the real sensor data for a predetermined time period, inputs the accumulated real sensor data to the correction model stored in the correction-model storage unit 133, and predicts the congestion-related information of all areas during that time period.

The congestion-related information predicted here is given to the prediction executing unit 173.

The prediction executing unit 173 functions as a second predicting unit that uses the prediction model to predict, from the congestion-related information predicted by the correction-model applying unit 172, future congestion levels of any area out of the m areas.

The prediction executing unit 173 accumulates the congestion-related information predicted by the correction-model applying unit 172 for a predetermined time period and uses the accumulated congestion-related information as real-time congestion area data.

The prediction executing unit 173 then retrieves a prediction model from the prediction-model storage unit 134. The prediction executing unit 173 predicts a future congestion level of a target area by inputting, into the retrieved prediction model, real-time congestion-area data and a target area, which is an area of which the future congestion level is to be predicted. The congestion level predicted here is given to the prediction-result output unit 174.

The prediction-result output unit 174 outputs the congestion level predicted by the prediction executing unit 173 as a prediction result.

For example, the prediction-result output unit 174 may output the prediction result by generating a prediction-result screen image, which is a screen image presenting the congestion level, and displaying the prediction-result screen image on a display unit (not illustrated).

The prediction-result output unit 174 may output a prediction result by generating prediction-result information, which is information indicating the congestion level, and transmitting the prediction-result information to another device via the communication unit 180.

The communication unit 180 performs communication through the network 101.

For example, the communication unit 180 receives data indicating values detected by the sensors 110.

The above congestion prediction device 120 can be implemented by, for example, a computer 10 illustrated in FIG. 6.

FIG. 6 is a block diagram schematically illustrating a configuration of the computer 10.

The computer 10 includes a processor 11, a volatile storage device 12, a nonvolatile storage device 13, and a communication device 14.

The computer 10 incorporating the processor 11 is, for example, a personal computer, a stationary computer such as a server type computer, a portable computer such as a smartphone or a tablet computer, a microcomputer for device embedding applications, or a system-on-chip (SoC).

The processor 11 comprehensively controls the computer 10. For example, the processor 11 is a central processing unit (CPU), a field programmable gate array (FPGA), a digital signal processor (DSP), or the like. The processor 11 may be a single processor or a multiprocessor.

The volatile storage device 12 is the main storage device of the computer 10. For example, the volatile storage device 12 is a random access memory (RAM).

The nonvolatile storage device 13 is an auxiliary storage device of the computer 10. For example, the nonvolatile storage device 13 is a read only memory (ROM), a hard disk drive (HDD), or a solid-state drive (SSD).

The communication device 14 is a communication interface for a network interface card (NIC) or the like.

The processor 11 uses the volatile storage device 12 as a work memory and operates in accordance with a computer program retrieved from the nonvolatile storage device 13 through a communication channel 15. The computer program may be supplied from outside the computer 10. Alternatively, the computer program may be distributed by a nonvolatile storage medium readable by the computer 10, e.g., a compact disc (CD), a digital versatile disc (DVD), or a flash memory. In other words, a computer program may be provided as a program product.

Here, the storage unit 130 of the congestion prediction device 120 illustrated in FIG. 3 can be implemented by the volatile storage device 12 or the nonvolatile storage device 13.

The control unit 140 can be implemented by the processor 11 reading a program stored in the nonvolatile storage device 13 into the volatile storage device 12 and executing the program.

The communication unit 180 can be implemented by the communication device 14.

The congestion prediction device 120 may include a processing circuit such as an application specific integrated circuit (ASIC) in addition to a computer. The processing circuit may be a single circuit or a composite circuit.

In other words, the congestion prediction device 120 can be implemented by processing circuitry.

The operation of the congestion prediction device 120 will now be explained.

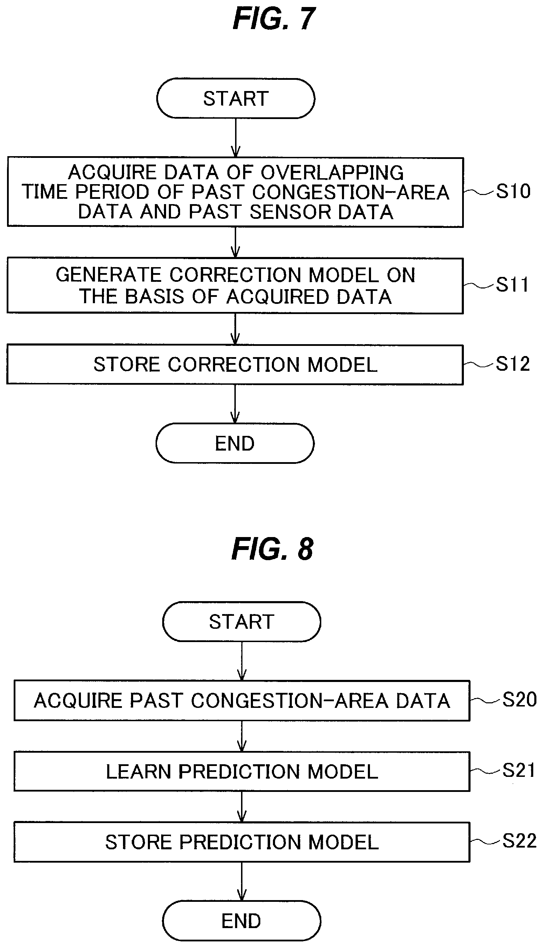

FIG. 7 is a flow chart illustrating an example of a correction-model generation process executed by the correcting unit 150.

First, the retrieving unit 151 retrieves data of overlapping time periods from the past-congestion-area-data storage unit 131 and the past-sensor-data storage unit 132 (step S10). The retrieved data is given to the correction-model generating unit 152.

Next, the correction-model generating unit 152 uses the data retrieved in step S11 to generate a correction model (step S10). The generated correction model is given to the correction-model output unit 153.

Here, for example, a regression method such as multiple regression can be used for the correction-model generation process.

Specifically, the correction-model generating unit 152 generates a correction model by using a multiple regression equation, such as equation (1) below, as a correction model and optimizing correction coefficients $\alpha 1$ to $\alpha k$, which are parameters of the correction model, and a constant term $\beta$ through the least squares method or the like, where value y is included in the past congestion-area data and values 1 to k are indicated by the past sensor data.

$$y = \alpha 1 \times 1 + \alpha 2 \times 2 + \alpha 3 \times 3 + \text{...} + \alpha k \times k + \beta \qquad (1)$$

The correction-model generating unit 152 may generate a correction model by using any learning algorithm. For example, the correction-model generating unit 152 may generate a model by using a machine learning algorithm such as a neural network, a support vector machine (SVM), a gradient boosting decision tree (GBDT), clustering, or reinforcement learning, in place of a known statistical method such as single regression or multiple regression.

Next, the correction-model output unit 153 stores the correction model in the correction-model storage unit 133 (step S12).

FIG. 8 is a flow chart illustrating an example of a prediction-model learning process executed by the learning unit 160.

First, the retrieving unit 161 retrieves past congestion-area data from the past-congestion-area-data storage unit 131 (step S20). The retrieved past congestion-area data is given to the model learning unit 162.

Next, the model learning unit 162 uses the past congestion-area data as learning data to generate a prediction model (step S21). The generated prediction model is given to the prediction-model output unit 163.

Alternatively, the model learning unit 162 may generate a model by using any learning algorithm. For example, the model learning unit 162 may generate a prediction model by using a learning algorithm such as a neural network, a support vector machine, a gradient boosting decision tree, clustering, or reinforcement learning.

Next, the prediction-model output unit 163 stores the prediction model in the prediction-model storage unit 134 (step S22).

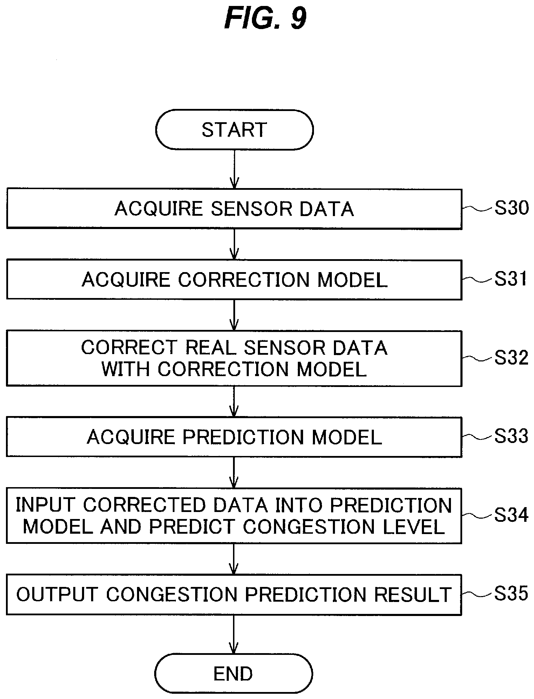

FIG. 9 is a flow chart illustrating an example of a prediction process executed by the predicting unit 170.

First, the acquiring unit 171 acquires real sensor data from the sensors 110 (step S30). The real sensor data is given to the correction-model applying unit 172.

Next, the correction-model applying unit 172 acquires the correction model from the correction-model storage unit 133 (step S31).

The correction-model applying unit 172 then accumulates real sensor data for a predetermined time period, corrects the real sensor data by inputting the real sensor data into the correction model, and acquires real-time congestion-area data by predicting the congestion-related information (step S32).

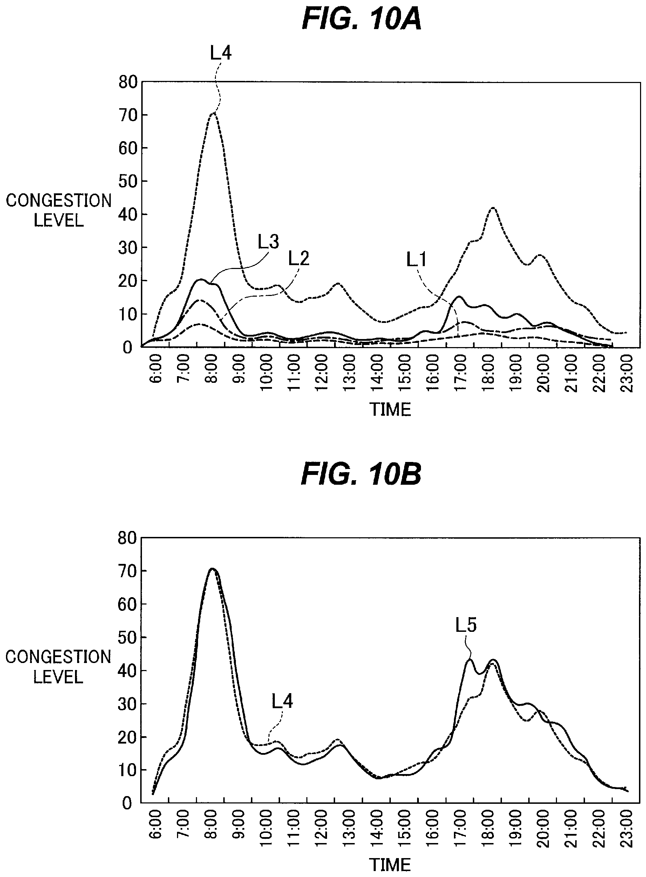

FIGS. 10A and 10B are schematic diagrams for explaining past congestion-area data and real-time congestion-area data.

Lines L1 to L3 in FIG. 10A indicate values detected by a sensor 110.

Line L4 in FIG. 10A represents a congestion level included in past congestion-area data.

Line L4 in FIG. 10B represents a congestion level included in past congestion-area data, as in FIG. 10A.

Line L5 in FIG. 10B represents a congestion level predicted by inputting the values represented by lines L1 to L3 in FIG. 10A as real sensor data into a correction model stored in the correction-model storage unit 133. In other words, line L5 represents a congestion level included in the real-time congestion-area data.

Since detection in all areas by the sensors 110 is difficult in real-time, past congestion-area data is used as learning data when the correcting unit 150 learns a correction model. Then, when the predicting unit 170 performs prediction, real-time congestion-area data is generated from the real sensor data by using the correction model learned in this way, and prediction is performed by inputting the generated real-time congestion-area data into the prediction model. In this way, it is possible to take advantage of both the congestion area data that is difficult to acquire in real-time but is an accumulation of past data, and the sensor data that can be acquired in real-time but is not accumulated for all areas.

Referring back to FIG. 9, the prediction executing unit 173 acquires a prediction model from the prediction-model storage unit 134 (step S33).

The correction-model applying unit 172 then accumulates the congestion-related information predicted in step S32 for a predetermined time period, inputs the accumulated congestion-related information into the prediction model as real-time congestion-area data, and predicts a future congestion level in a target area, which is an area for which the prediction is performed (step S34). The predicted congestion level is given to the prediction-result output unit 174.

Next, the prediction-result output unit 174 outputs the predicted congestion level as a congestion prediction result from the congestion prediction device 120 (step S35) .

As described above, according to the first embodiment, past congestion levels of prediction target areas are learned by the model, and sensor data of the sensors 110 installed in several areas is inputted to the model, to enable prediction of future congestion levels in areas where no sensors 110 are installed. Therefore, users can take congestion avoidance actions in advance, and user satisfaction is improved.

## SECOND EMBODIMENT

As illustrated in FIG. 1, a congestion prediction system 200 according to the second embodiment includes a first sensor 110A, a second sensor 110B, a third sensor 110C,... and a congestion prediction device 220.

The first sensor 110A, the second sensor 110B, the third sensor 110C,... and the congestion prediction device 220 are connected to, for example, a network 101, such as the Internet, and sensor data detected by the first sensor 110A, the second sensor 110B, the third sensor 110C,... is transmitted to the congestion prediction device 220.

The sensors 110 of the congestion prediction system 200 according to the second embodiment are the same as the sensors 110 of the congestion prediction system 100 according to the first embodiment.

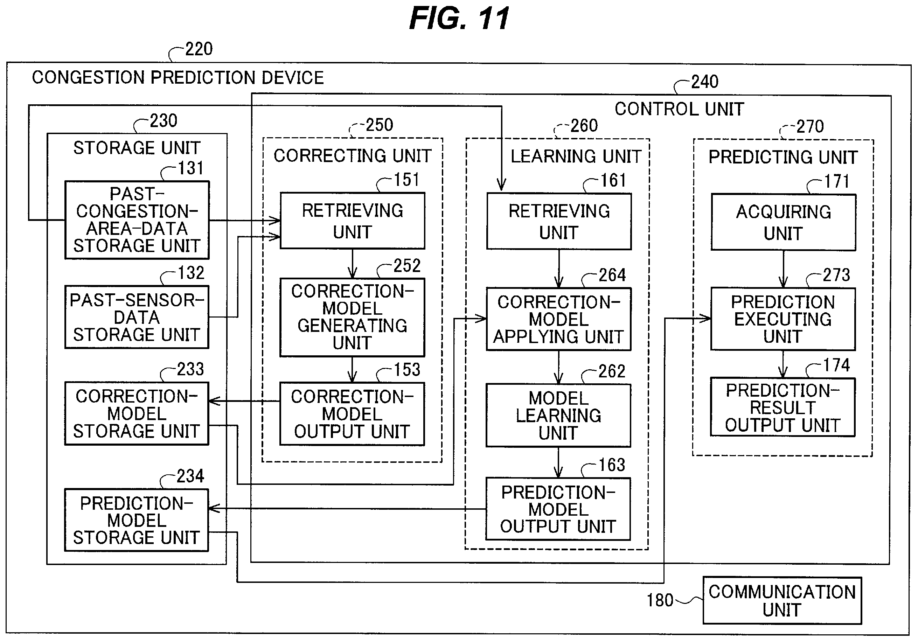

FIG. 11 is a block diagram schematically illustrating a configuration of the congestion prediction device 220 according to the second embodiment.

The congestion prediction device 220 includes a storage unit 230, a control unit 240, and a communication unit 180.

The control unit 240 includes a correcting unit 250, a learning unit 260, and a predicting unit 270.

The communication unit 180 of the congestion prediction device 220 according to the second embodiment is the same as the communication unit 180 of the congestion prediction device 120 of the first embodiment.

The congestion prediction device 220 of the second embodiment generates a model on the basis of past congestion-area data including information relating to congestion, such as congestion information, weather information, and event information, of each area in the past, and past sensor data, which is past sensor data provided by the sensors 110 installed in any of the areas, and uses the model to perform prediction from current sensor data.

In other words, the congestion prediction device 220 functions as a learning device that learns a learning model, a prediction device that uses a learning model to perform prediction, and a learning prediction device that performs learning and prediction.

The storage unit 230 includes a past-congestion-area-data storage unit 131, a past-sensor-data storage unit 132, a correction-model storage unit 233, and a prediction-model storage unit 234.

The past-congestion-area-data storage unit 131 and the past-sensor-data storage unit 132 of the storage unit 230 according to the second embodiment are respectively the same as the past-congestion-area-data storage unit 131 and the past-sensor-data storage unit 132 of the storage unit 130 according to the first embodiment.

The correction-model storage unit 233 stores a correction model that is a learning model for predicting, from congestion-related information, values to be detected by sensors 110 at a time point at which the congestion-related information is acquired.

The prediction-model storage unit 234 stores a prediction model that is a learning model for predicting, from values detected by the sensors 110, future congestion levels.

The correcting unit 250 of the control unit 240 includes a retrieving unit 151, a correction-model generating unit 252, and a correction-model output unit 153.

The retrieving unit 151 and the correction-model output unit 153 of the correcting unit 250 according to the second embodiment are respectively the same as the retrieving unit 151 and the correction-model output unit 153 of the correcting unit 150 according to the first embodiment.

The correction-model generating unit 252 functions as a first-model generating unit that generates a first model that is a learning model for predicting, from congestion-related information, values to be detected by one or more sensors 110 at the time point at which the congestion-related information is acquired, by using the congestion-related information indicated by past congestion-area data as input data and values indicated by past sensor data as correct data.

For example, the correction-model generating unit 252 uses congestion-related information of a certain time point as input data and uses the values detected by the sensors 110 at that time point as correct data, to learn the first model.

Here, the correction-model generating unit 252 uses the congestion-related information retrieved by the retrieving unit 151 to generate a correction model as the first model for predicting the values to be detected by the sensors 110. The generated correction model is given to the correction-model output unit 153.

The learning unit 260 of the control unit 240 includes a retrieving unit 161, a model learning unit 262, a prediction-model output unit 163, and a correction-model applying unit 264.

The retrieving unit 161 and the prediction-model output unit 163 of the learning unit 260 according to the second embodiment are respectively the same as the retrieving unit 161 and the prediction-model output unit 163 of the learning unit 160 according to the first embodiment.

However, the retrieving unit 161 according to the second embodiment gives the past congestion-area data retrieved from the past-congestion-area-data storage unit 131 to the correction-model applying unit 264.

The correction-model applying unit 264 functions as a model applying unit that uses a correction model to predict, from congestion-related information indicated by the past congestion-area data provided by the retrieving unit 161, values to be detected by the sensors 110 at the time point at which the past congestion-area data is acquired. Sensor data indicating the values predicted here is also referred to as predicted sensor data. The predicted sensor data is given to the model learning unit 262.

The model learning unit 262 functions as a second-model generating unit that generates a second model, which is a learning model for predicting future congestion levels from the sensor data, by using predicted sensor data of a first time point as input data and using the congestion levels included in the congestion-related information of past congestion-zone data of a second time point after the first time point as correct data.

For example, the model learning unit 262 learns the second model by using predicted sensor data in one or more time zones as input data and using the congestion level of one area out of m areas of a time point after the one or more time zones as correct data. The generated prediction model is given to the prediction-model output unit 163.

The predicting unit 270 of the control unit 240 includes an acquiring unit 171, a prediction executing unit 273, and a prediction-result output unit 174.

The acquiring unit 171 and the prediction-result output unit 174 of the predicting unit 270 according to the second embodiment are respectively the same as the acquiring unit 171 and the prediction-result output unit 174 of the predicting unit 170 according to the first embodiment.

However, the acquiring unit 171 according to the first embodiment gives real sensor data, which is data indicating values acquired from the sensors 110, to the prediction executing unit 273.

The prediction executing unit 273 functions as a second predicting unit that uses a prediction model to predict future congestion levels of any area out of the m areas from the real sensor data from the acquiring unit 171.

The prediction executing unit 273 accumulates the real sensor data from the acquiring unit 171 for a predetermined time period and uses the accumulated real sensor data as target sensor data.

The prediction executing unit 273 then retrieves the prediction model from the prediction-model storage unit 134. The prediction executing unit 273 predicts the future congestion levels of a target area by inputting, into the retrieved prediction model, target sensor data and a target area, which is an area for which future congestion levels are to be predicted. The congestion levels predicted here are given to the prediction-result output unit 174.

As described above, according to the second embodiment, the past congestion levels of prediction target areas are learned by a model, and sensor data of the sensors 110 installed in several areas is inputted to the model, to enable prediction of future congestion levels in areas where no sensors 110 are installed. Therefore, users can take congestion avoidance actions in advance, and user satisfaction is improved.

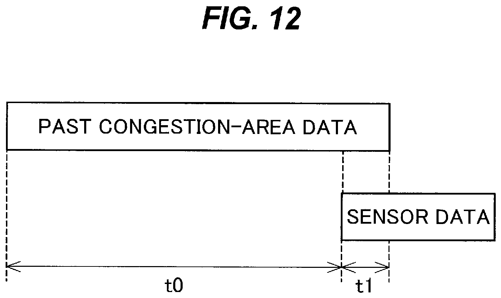

According to the second embodiment, for example, as illustrated in FIG. 12, even if the time period during which sensor data is acquired is shorter than the time period during which past congestion-area data is acquired, as long as there is a time period t1 during which both sensor data and past congestion-area data are acquired, the correction-model generating unit 252 can generate a correction model by using the data acquired during the time period t1.

The correction-model applying unit 264 can then use a correction model to predict sensor data of a time period t0 during which no sensor data is acquired.

Thus, the model learning unit 262 can use the predicted sensor data to generate a prediction model.

Therefore, in the second embodiment, the load of sensor data acquisition can be reduced, and future congestion levels can be predicted, for example, by installing sensors 110 immediately before the congestion prediction device 220 is operated and by acquiring sensor data.

The model learning unit 262 may also use sensor data of the time period t1 while learning a prediction model. In this way, the prediction accuracy can be enhanced.

According to the first and second embodiments, not only can the installation cost of the sensors 110 be reduced, but the accumulation time of data to be used in prediction and the man-hours regarding data collection can also be reduced.

The first and second embodiments are not limited to the examples described above, and the configuration of the congestion prediction devices 120 and 220, the configuration of the information stored in the storage units 130 and 230 can be implemented in various modifications without departing from the gist of the present invention.

In short, the present invention is not limited to the above embodiments, and the components can be modified and embodied without departing from the gist of the present invention. Various aspects of the invention can be formed by suitable combinations of the components disclosed in the above embodiments. For example, some components may be removed from the components described in the above embodiments. Moreover, components across different embodiments may be appropriately combined.

## DESCRIPTION OF REFERENCE CHARACTERS

100, 200 congestion prediction system; 110 sensor; 120, 220 congestion prediction device; 130, 230 storage unit; 131 past-congestion-area-data storage unit; 132 past-sensor-data storage unit; 133, 233 correction-model storage unit; 134, 234 prediction-model storage unit; 140 control unit; 150, 250 correcting unit; 151 retrieving unit; 152, 252 correction-model generating unit; 153 correction-model output unit; 160, 260 learning unit; 161 retrieving unit; 162, 262 model learning unit; 163 prediction-model output unit; 264 correction-model applying unit; 170, 270 predicting unit; 171 acquiring unit; 172 correction-model applying unit; 173,273 prediction executing unit; 174 prediction-result output unit; 180 communication unit.

## Claims

1. A learning device (120) comprising:

   a past-congestion-area-data storage unit (131) configured to store past congestion-area data indicating congestion-related information including a past congestion level of each of m areas, wherein m is an integer of two or more;
   **characterised by**
   a past-sensor-data storage unit (132) configured tc store past sensor data indicating values detected in the past by one or more sensors installed in n areas out of the m areas, wherein n is an integer of one or more, and wherein n<m;
   a first-model generating unit (152) configured to generate a first model by using the values indicated by the past sensor data as input data and using the congestion-related information indicated by the past congestion-area data as correct data, the first model being a learning model for predicting, from values detected by the one or more sensors, congestion-related information of a time point at which the one or more sensors perform detection; and
   a second-model generating unit (162) configured to generate a second model by using the congestion-related information of a first time point indicated by the past congestion-area data as input data and using the congestion level in the congestion-related information of a second time point indicated by the past congestion-area data as correct data, the second model being a learning model for predicting a future congestion level from the congestion-related information, the second time point being a time point after the first time point.

2. The learning device (120) according to claim 1, wherein,

   the past congestion-area data indicates the congestion-related information of respective time points, and
   the past sensor data indicates the values of the respective time points.

3. The learning device (120) according to claim 1 or 2, further comprising:

   an acquiring unit (171) configured to acquire values detected by the one or more sensors;
   a first predicting unit (172) configured to use the first model to predict, from the acquired values, congestion-related information of a time point at which the one or more sensors perform detection; and
   a second predicting unit (173) configured to use the second model to predict, from the predicted congestion-related information, a future congestion level of any of the m areas.

4. A prediction device (120) **characterised by**:

   an acquiring unit (171) configured to acquire values detected by one or more sensors installed in n areas out of m areas, wherein n is an integer of one or more, wherein m is an integer of two or more, and wherein n<m;
   a first predicting unit (172) configured to use a first model to predict, from the acquired values, congestion-related information of a time point at which one or more sensors perform detection, the first model being a learning model for predicting, from values to be detected by the one or more sensors, the congestion-related information of the time point at which the one or more sensors perform detection, the first model being generated by using values indicated by past sensor data indicating the values detected in the past by the one or more sensors installed in n areas out of the m areas, wherein n is an integer of one or more, and wherein n<m, as input data and using the congestion-related information indicated by past congestion-area data indicating the congestion-related information including a past congestion level of each of the m areas as correct data; and

a second predicting unit (173) configured to use a second model to predict, from the predicted congestion-related information, a future congestion level of any of the m areas, the second model being a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

5. A learning method **characterised by**:

generating a first model that is a learning model for predicting, from values detected by one or more sensors, congestion-related information of a time point at which the one or more sensors perform detection, the first model being generated by using values indicated by past sensor data indicating the values detected in the past by the one or more sensors installed in n areas out of m areas, wherein n is an integer of one or more, wherein m is an integer of two or more, and wherein n<m, as input data and using the congestion-related information indicated by past congestion-area data indicating the congestion-related information including a past congestion level of each of the m areas as correct data; and

generating a second model that is a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

6. A prediction method **characterised by**:

acquiring values detected by one or more sensors installed in n areas out of m areas, wherein n is an integer of one or more, wherein m is an integer of two or more, and wherein n<m;

using a first model to predict, from the acquired values, congestion-related information of a time point at which one or more sensors perform detection, the first model being a learning model for predicting, from values to be detected by the one or more sensors, the congestion-related information of the time point at which the one or more sensors perform detection, the first model being generated by using values indicated by past sensor data indicating the values detected in the past by the one or more sensors installed in n areas out of the m areas, wherein n is an integer of one or more, and wherein n<m, as input data and using the congestion-related information indicated by past congestion-area data indicating the congestion-related information including a past congestion level of each of the m areas as correct data; and

using a second model to predict, from the predicted congestion-related information, a future congestion level of any of the m areas, the second model being a learning model for predicting a future congestion level from the congestion-related information, the second model being generated by using the congestion-related information of a first time point indicated by the past congestion-area data as input data and using the congestion level in the congestion-related information of a second time point indicated by the past congestion-area data as correct data, the second time point being a time point after the first time point.

## Patentansprüche

1. Lernvorrichtung (120), umfassend:

eine Vergangene-Überlastungsgebietsdaten-Speichereinheit (131), die eingerichtet ist, vergangene Überlastungsgebietsdaten, die überlastungsbezogene Informationen einschließlich eines vergangenen Überlastungsgrades jedes von m Gebieten angeben, zu speichern, wobei m eine ganze Zahl von zwei oder mehr ist; **gekennzeichnet durch**

eine Vergangene-Sensordaten-Speichereinheit (132), die eingerichtet ist, vergangene Sensordaten, welche Werte angeben, die in der Vergangenheit von einem oder mehreren Sensoren erfasst wurden, die in n Gebieten aus den m Gebieten installiert sind, zu speichern, wobei n eine ganze Zahl von eins oder mehr ist, und wobei n < m ist;

eine Erstes-Modell-Generierungseinheit (152), die eingerichtet ist, ein erstes Modell unter Verwendung der durch die vergangenen Sensordaten angegebenen Werte als Eingangsdaten und unter Verwendung der durch die vergangenen Überlastungsgebietsdaten angegebenen überlastungsbezogenen Informationen als Referenzdaten zu generieren, wobei das erste Modell ein Lernmodell zum Vorhersagen, aus Werten, welche von dem einen oder den mehreren Sensoren erfasst werden, von überlastungsbezogenen Informationen eines Zeitpunkts, zu dem der eine oder die mehreren Sensoren eine Erfassung durchführen, ist, aus Werten, welche von dem einen oder den mehreren Sensoren erfasst werden; und

eine Zweites-Modell-Generierungseinheit (162), die eingerichtet ist, ein zweites Modell unter Verwendung der überlastungsbezogenen Informationen eines ersten Zeitpunkts, der durch die vergangenen Überlastungsgebietsdaten angegeben ist, als Eingabedaten, und unter Verwendung des Überlastungsgrades in den überlastungsbezogenen Informationen eines zweiten Zeitpunkts, der durch die vergangenen Überlastungsgebietsdaten angegeben ist, als Referenzdaten zu generieren, wobei das zweite Modell ein Lernmodell zum Vorhersagen eines zukünftigen Überlastungsgrades aus den überlastungsbezogenen Informationen ist, wobei der zweite Zeitpunkt ein Zeitpunkt nach dem ersten Zeitpunkt ist.

2.  Lernvorrichtung (120) nach Anspruch 1, wobei

die vergangenen Überlastungsgebietsdaten die überlastungsbezogenen Informationen jeweiliger Zeitpunkte angeben, und

die vergangenen Sensordaten die Werte der jeweiligen Zeitpunkte angeben.

3.  Lernvorrichtung (120) nach Anspruch 1 oder 2, ferner umfassend:

eine Erwerbungseinheit (171), die eingerichtet ist, die von dem einen oder den mehreren Sensoren erfassten Werte zu erwerben;

eine erste Vorhersageeinheit (172), die eingerichtet ist, das erste Modell zu nutzen, um aus den erworbenen Werten überlastungsbezogene Informationen eines Zeitpunkts vorherzusagen, zu dem der eine oder die mehreren Sensoren eine Erfassung durchführen; und

eine zweite Vorhersageeinheit (173), die eingerichtet ist, das zweite Modell zu nutzen, um aus den vorhergesagten überlastungsbezogenen Informationen einen zukünftigen Überlastungsgrad eines beliebigen der m Gebiete vorherzusagen.

4.  Vorhersagevorrichtung (120), **gekennzeichnet durch**:

eine Erwerbungseinheit (171), die eingerichtet ist, Werte zu erwerben, die von einem oder mehreren Sensoren erfasst werden, die in n Gebieten von m Gebieten installiert sind, wobei n eine ganze Zahl von eins oder mehr ist, wobei m eine ganze Zahl von zwei oder mehr ist, und wobei n < m ist;

eine erste Vorhersageeinheit (172), die eingerichtet ist, ein erstes Modell zu nutzen, um aus den erworbenen Werten überlastungsbezogene Informationen eines Zeitpunkts vorherzusagen, zu dem ein oder mehrere Sensoren eine Erfassung durchführen, wobei das erste Modell ein Lernmodell ist zum Vorhersagen, aus Werten, die von dem einen oder den mehreren Sensoren zu erfassen sind, der überlastungsbezogenen Informationen des Zeitpunkts vorherzusagen, zu dem der eine oder die mehreren Sensoren eine Erfassung durchführen, wobei das erste Modell unter Verwendung von Werten, welche durch die vergangenen Sensordaten angegeben sind, welche die Werte angeben, die in der Vergangenheit von dem einen oder den mehreren Sensoren erfasst wurden, die in n Gebieten aus den m Gebieten installiert sind, wobei n eine ganze Zahl von eins oder mehr ist, und wobei n < m ist, als Eingangsdaten, und unter Verwendung der überlastungsbezogenen Informationen, die durch vergangene Überlastungsgebietsdaten angegeben sind, welche die überlastungsbezogenen Informationen einschließlich eines vergangenen Überlastungsgrades jedes der m Gebiete angeben, als Referenzdaten, generiert wird; und

eine zweite Vorhersageeinheit (173), die eingerichtet ist, ein zweites Modell zu nutzen, um aus den vorhergesagten überlastungsbezogenen Informationen einen zukünftigen Überlastungsgrad eines beliebigen der m Gebiete vorherzusagen, wobei das zweite Modell ein Lernmodell ist zum Vorhersagen eines zukünftigen Überlastungsgrades aus den überlastungsbezogenen Informationen, wobei das zweite Modell unter Verwendung der überlastungsbezogenen Informationen eines ersten Zeitpunkts, der durch die vergangenen Überlastungsgebietsdaten angegeben ist, als Eingabedaten, und unter Verwendung des Überlastungsgrades in den überlastungsbezogenen Informationen eines zweiten Zeitpunkts, der durch die vergangenen Überlastungsgebietsdaten angegeben ist, als Referenzdaten generiert wird, wobei der zweite Zeitpunkt ein Zeitpunkt nach dem ersten Zeitpunkt ist.

**5.** Lernverfahren, **gekennzeichnet durch**:

Generieren eines ersten Modells, das ein Lernmodell ist zum Vorhersagen aus Werten, die von einem oder mehreren Sensoren erfasst werden, von überlastungsbezogenen Informationen eines Zeitpunkts, zu dem der eine oder die mehreren Sensoren eine Erfassung durchführen, wobei das erste Modell unter Verwendung von Werten, die durch vergangene Sensordaten angegeben sind, welche die in der Vergangenheit von dem einen oder den mehreren Sensoren, die in n Gebieten aus m Gebieten installiert sind, erfassten Werte angeben, wobei n eine ganze Zahl von eins oder mehr ist, wobei m eine ganze Zahl von zwei oder mehr ist, und wobei n < m ist, als Eingangsdaten, und unter Verwendung der überlastungsbezogenen Informationen, die durch vergangene Überlastungsgebietsdaten angegeben sind, welche die überlastungsbezogenen Informationen einschließlich eines vergangenen Überlastungsgrades jedes der m Gebiete angeben, als Referenzdaten generiert wird; und Generieren eines zweiten Modells, das ein Lernmodell ist zum Vorhersagen eines zukünftigen Überlastungsgrades aus den überlastungsbezogenen Informationen, wobei das zweite Modell unter Verwendung der überlastungsbezogenen Informationen eines ersten Zeitpunkts, der durch die vergangenen Überlastungsgebietsdaten angegeben ist, als Eingabedaten, und unter Verwendung des Überlastungsgrades in den überlastungsbezogenen Informationen eines zweiten Zeitpunkts, der durch die vergangenen Überlastungsgebietsdaten angegeben ist, als Referenzdaten generiert wird, wobei der zweite Zeitpunkt ein Zeitpunkt nach dem ersten Zeitpunkt ist.

**6.** Vorhersageverfahren, **gekennzeichnet durch**:

Erwerben von Werten, die von einem oder mehreren Sensoren erfasst werden, die in n Gebieten von m Gebieten installiert sind, wobei n eine ganze Zahl von eins oder mehr ist, wobei m eine ganze Zahl von zwei oder mehr ist, und wobei n < m ist;
Nutzen eines ersten Modells, um aus den erworbenen Werten überlastungsbezogene Informationen eines Zeitpunkts vorherzusagen, zu dem ein oder mehrere Sensoren eine Erfassung durchführen, wobei das erste Modell ein Lernmodell ist zum Vorhersagen, aus Werten, die von dem einen oder mehreren Sensoren zu erfassen sind, der überlastungsbezogenen Informationen des Zeitpunkts, zu dem der eine oder die mehreren Sensoren eine Erfassung durchführen, wobei das erste Modell unter Verwendung von Werten, die durch vergangene Sensordaten angegeben sind, welche die in der Vergangenheit von dem einen oder den mehreren Sensoren, die in n Gebieten aus den m Gebieten installiert sind, erfassten Werte angeben, wobei n eine ganze Zahl von eins oder mehr ist, und wobei n < m ist, als Eingangsdaten, und unter Verwendung der überlastungsbezogenen Informationen, die durch vergangene Überlastungsgebietsdaten angegeben sind, welche die überlastungsbezogenen Informationen einschließlich eines vergangenen Überlastungsgrades jedes der m Gebiete angeben, als Referenzdaten generiert wird; und
Nutzen eines zweiten Modells, um aus den vorhergesagten überlastungsbezogenen Informationen einen zukünftigen Überlastungsgrad für ein beliebiges der m Gebiete vorherzusagen, wobei das zweite Modell ein Lernmodell ist zum Vorhersagen eines zukünftigen Überlastungsgrades aus den überlastungsbezogenen Informationen, wobei das zweite Modell unter Verwendung der überlastungsbezogenen Informationen eines ersten Zeitpunkts, der durch die vergangenen Überlastungsgebietsdaten angegeben ist, als Eingangsdaten, und unter Verwendung des Überlastungsgrades in den überlastungsbezogenen Informationen eines zweiten Zeitpunkts, der durch die vergangenen Überlastungsgebietsdaten angegeben ist, als Referenzdaten generiert wird, wobei der zweite Zeitpunkt ein Zeitpunkt nach dem ersten Zeitpunkt ist.

**Revendications**

**1.** Dispositif d'apprentissage (120) comprenant :

une unité de stockage de données de zone de congestion antérieure (131) configurée pour stocker des données de zone de congestion antérieure indiquant des informations liées à une congestion incluant un niveau de congestion passée de chacune de m zones, dans lequel m est un entier de deux ou plus ;
**caractérisé par**
une unité de stockage de données de capteur antérieures (132) configurée pour stocker des données de capteur antérieures indiquant des valeurs détectées dans le passé par un ou plusieurs capteurs installés dans n zones parmi les m zones, dans lequel n est un entier d'un ou plus, et dans lequel n<m ;
une unité de génération de premier modèle (152) configurée pour générer un premier modèle en utilisant les valeurs indiquées par les données de capteur antérieures comme données d'entrée et en utilisant les informations relatives à la congestion indiquées par les données de zone de congestion antérieures en tant que données correctes, le premier modèle étant un modèle d'apprentissage pour prédire, à partir de valeurs détectées par les un ou plusieurs capteurs, des informations relatives à une congestion d'un point temporel au niveau duquel les un ou plusieurs capteurs effectuent une détection ; et

une unité de génération de second modèle (162) configurée pour générer un second modèle en utilisant les informations relatives à une congestion d'un premier point temporel indiqué par les données de zone de congestion antérieures en tant que données d'entrée et en utilisant le niveau de congestion dans les informations relatives à une congestion d'un second point temporel indiqué par les données de zone de congestion antérieures en tant que données correctes, le second modèle étant un modèle d'apprentissage pour prédire un niveau de congestion futur à partir des informations relatives à une congestion, le second point temporel étant un point temporel après le premier point temporel.

2. Dispositif d'apprentissage (120) selon la revendication 1, dans lequel,

les données de zone de congestion antérieures indiquent les informations relatives à une congestion des points temporels respectifs, et
les données de capteur antérieures indiquent les valeurs des points temporels respectifs.

3. Dispositif d'apprentissage (120) selon la revendication 1 ou 2, comprenant en outre :

une unité d'acquisition (171) configurée pour acquérir des valeurs détectées par les un ou plusieurs capteurs ;
une première unité de prédiction (172) configurée pour utiliser le premier modèle pour prédire, à partir des valeurs acquises, des informations relatives à une congestion d'un point temporel au niveau duquel les un ou plusieurs capteurs effectuent une détection ; et
une seconde unité de prédiction (173) configurée pour utiliser le second modèle pour prédire, à partir des informations relatives à une congestion prédites, un niveau de congestion futur de l'une quelconque des m zones.

4. Dispositif de prédiction (120) **caractérisé par** :

une unité d'acquisition (171) configurée pour acquérir des valeurs détectées par un ou plusieurs capteurs installés dans n zones parmi m zones, dans lequel n est un entier d'un ou plus, dans lequel m est un entier de deux ou plus, et dans lequel n<m ;
une première unité de prédiction (172) configurée pour utiliser un premier modèle pour prédire, à partir des valeurs acquises, des informations relatives à une congestion d'un point temporel au niveau duquel un ou plusieurs capteurs effectuent une détection, le premier modèle étant un modèle d'apprentissage pour prédire, à partir de valeurs devant être détectées par les un ou plusieurs capteurs, les informations relatives à une congestion du point temporel au niveau duquel les un ou plusieurs capteurs effectuent une détection, le premier modèle étant généré en utilisant des valeurs indiquées par des données de capteur antérieures indiquant les valeurs détectées dans le passé par les un ou plusieurs capteurs installés dans n zones parmi les m zones, dans lequel n est un entier d'un ou plus, et dans lequel n<m, en tant que données d'entrée et en utilisant les informations relatives à une congestion indiquées par des données de zone de congestion antérieures indiquant les informations relatives à une congestion incluant un niveau de congestion antérieure de chacune des m zones en tant que données correctes ; et
une seconde unité de prédiction (173) configurée pour utiliser un second modèle pour prédire, à partir des informations relatives à une congestion prédites, un niveau de congestion futur de l'une quelconque des m zones, le second modèle étant un modèle d'apprentissage pour prédire un niveau de congestion futur à partir des informations relatives à une congestion, le second modèle étant généré en utilisant les informations relatives à une congestion d'un premier point temporel indiqué par les données de zone de congestion antérieures en tant que données d'entrée et en utilisant le niveau de congestion dans les informations relatives à une congestion d'un second point temporel indiqué par les données de zone de congestion antérieures en tant que données correctes, le second point temporel étant un point temporel après le premier point temporel.

5. Procédé d'apprentissage **caractérisé par** les étapes consistant à :

générer un premier modèle qui est un modèle d'apprentissage pour prédire, à partir de valeurs détectées par un ou plusieurs capteurs, des informations relatives à une congestion d'un point temporel au niveau duquel les un ou plusieurs capteurs effectuent une détection, le premier modèle étant généré en utilisant des valeurs indiquées par des données de capteurs antérieures indiquant les valeurs détectées dans le passé par les un ou plusieurs capteurs installés dans n zones parmi m zones, dans lequel n est un entier d'un ou plus, dans lequel m est un entier de deux ou plus, et dans lequel n<m, en tant que données d'entrée et en utilisant les informations relatives à une congestion indiquées par des données de zone de congestion antérieures indiquant les informations relatives à une congestion incluant un niveau de congestion antérieure de chacune des m zones en tant que données correctes ; et

générer un second modèle qui est un modèle d'apprentissage pour prédire un niveau de congestion futur à partir des informations relatives à une congestion, le second modèle étant généré en utilisant les informations relatives à une congestion d'un premier point temporel indiqué par les données de zone de congestion antérieures en tant que données d'entrée et en utilisant le niveau de congestion dans les informations relatives à une congestion d'un second point temporel indiqué par les données de zone de congestion antérieures en tant que données correctes, le second point temporel étant un point temporel après le premier point temporel.

6. Procédé de prédiction **caractérisé par** les étapes consistant à :

acquérir des valeurs détectées par un ou plusieurs capteurs installés dans n zones parmi m zones, dans lequel n est un entier d'un ou plus, dans lequel m est un entier de deux ou plus, et dans lequel n<m ;

utiliser un premier modèle pour prédire, à partir des valeurs acquises, des informations relatives à une congestion d'un point temporel au niveau duquel un ou plusieurs capteurs effectuent une détection, le premier modèle étant un modèle d'apprentissage pour prédire, à partir de valeurs devant être détectées par les un ou plusieurs capteurs, les informations relatives à une congestion du point temporel au niveau duquel les un ou plusieurs capteurs effectuent une détection, le premier modèle étant généré en utilisant des valeurs indiquées par des données de capteur antérieures indiquant les valeurs détectées dans le passé par les un ou plusieurs capteurs installés dans n zones parmi les m zones, dans lequel n est un entier d'un ou plus, et dans lequel n<m, en tant que données d'entrée et en utilisant les informations relatives à une congestion indiquées par des données de zone de congestion antérieures indiquant les informations relatives à une congestion incluant un niveau de congestion antérieure de chacune des m zones en tant que données correctes ; et

utiliser un second modèle pour prédire, à partir des informations relatives à une congestion prédites, un niveau de congestion futur de l'une quelconque des m zones, le second modèle étant un modèle d'apprentissage pour prédire un niveau de congestion futur à partir des informations relatives à une congestion, le second modèle étant généré en utilisant les informations relatives à une congestion d'un premier point temporel indiqué par les données de zone de congestion antérieures en tant que données d'entrée et en utilisant le niveau de congestion dans les informations relatives à une congestion d'un second point temporel indiqué par les données de zone de congestion antérieures en tant que données correctes, le second point temporel étant un point temporel après le premier point temporel.

## FIG. 1

FIRST SENSOR ~110A

SECOND SENSOR ~110B

THIRD SENSOR ~110C

101

CONGESTION PREDICTION DEVICE ~120, 200

~100, 200

## FIG. 2

| FIRST AREA | THIRD AREA | FIFTH AREA | SEVENTH AREA |

| SECOND AREA | FOURTH AREA | SIXTH AREA | EIGHTH AREA |

● SENSOR INSTALLATION SITE

**FIG. 3**

EP 4 401 013 B1

## FIG. 4

| TIME | FIRST AREA | | | | SECOND AREA | |
|---|---|---|---|---|---|---|
| | CONGESTION INFORMATION | WEATHER INFORMATION | EVENT INFORMATION | ... | CONGESTION INFORMATION | ... |
| 2021/01/01 6:00 | 110 | 10 | 0 | ... | 90 | ... |
| 2021/01/01 6:01 | 115 | 10 | 0 | ... | 82 | ... |
| ... | ... | ... | ... | ... | ... | ... |
| 2021/01/10 13:00 | 75 | 0 | 1 | ... | 69 | ... |
| ... | ... | ... | ... | ... | ... | ... |

## FIG. 5

| TIME | FIRST SENSOR | SECOND SENSOR | THIRD SENSOR | FOURTH SENSOR |
|---|---|---|---|---|
| 2021/01/01 6:00 | 10 | 13 | 40 | 35 |
| 2021/01/01 6:01 | 15 | 18 | 43 | 32 |
| ... | ... | ... | ... | ... |
| 2021/01/01 23:00 | 5 | 9 | 19 | 15 |
| ... | ... | ... | ... | ... |

## FIG. 6

## FIG. 7

START

↓

ACQUIRE DATA OF OVERLAPPING TIME PERIOD OF PAST CONGESTION-AREA DATA AND PAST SENSOR DATA — S10

↓

GENERATE CORRECTION MODEL ON THE BASIS OF ACQUIRED DATA — S11

↓

STORE CORRECTION MODEL — S12

↓

END

## FIG. 8

START

↓

ACQUIRE PAST CONGESTION-AREA DATA — S20

↓

LEARN PREDICTION MODEL — S21

↓

STORE PREDICTION MODEL — S22

↓

END

# FIG. 9

```
            ┌─────────────┐
            │    START    │
            └─────────────┘
                   │
                   ▼
┌──────────────────────────────────────┐
│         ACQUIRE SENSOR DATA          │─── S30
└──────────────────────────────────────┘
                   │
                   ▼
┌──────────────────────────────────────┐
│       ACQUIRE CORRECTION MODEL       │─── S31
└──────────────────────────────────────┘
                   │
                   ▼
┌──────────────────────────────────────┐
│        CORRECT REAL SENSOR DATA      │
│        WITH CORRECTION MODEL         │─── S32
└──────────────────────────────────────┘
                   │
                   ▼
┌──────────────────────────────────────┐
│       ACQUIRE PREDICTION MODEL       │─── S33
└──────────────────────────────────────┘
                   │
                   ▼
┌──────────────────────────────────────┐
│  INPUT CORRECTED DATA INTO PREDICTION│
│  MODEL AND PREDICT CONGESTION LEVEL  │─── S34
└──────────────────────────────────────┘
                   │
                   ▼
┌──────────────────────────────────────┐
│  OUTPUT CONGESTION PREDICTION RESULT │─── S35
└──────────────────────────────────────┘
                   │
                   ▼
            ┌─────────────┐
            │     END     │
            └─────────────┘
```

## FIG. 10A

## FIG. 10B

## FIG. 11

CONGESTION PREDICTION DEVICE — 220

CONTROL UNIT — 240

STORAGE UNIT — 230

- PAST-CONGESTION-AREA-DATA STORAGE UNIT — 131
- PAST-SENSOR-DATA STORAGE UNIT — 132
- CORRECTION-MODEL STORAGE UNIT — 233
- PREDICTION-MODEL STORAGE UNIT — 234

CORRECTING UNIT — 250

- RETRIEVING UNIT — 151
- CORRECTION-MODEL GENERATING UNIT — 252
- CORRECTION-MODEL OUTPUT UNIT — 153

LEARNING UNIT — 260

- RETRIEVING UNIT — 161
- CORRECTION-MODEL APPLYING UNIT — 264
- MODEL LEARNING UNIT — 262
- PREDICTION-MODEL OUTPUT UNIT — 163

PREDICTING UNIT — 270

- ACQUIRING UNIT — 171
- PREDICTION EXECUTING UNIT — 273
- PREDICTION-RESULT OUTPUT UNIT — 174

COMMUNICATION UNIT — 180

EP 4 401 013 B1

## FIG. 12

| PAST CONGESTION-AREA DATA |
|---|

|  | SENSOR DATA |
|---|---|

t0                              t1

**EP 4 401 013 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013116676 A

- US 2016124906 A

**Non-patent literature cited in the description**

- **PENG XIE** ; **TIANRUI LI** ; **SHENGDONG DU** ; **XIN YANG** ; **JUNBO ZHANG**. Urban flows prediction from spatial-temporal data using machine learning: A survey. *arXiv.org*, 26 August 2019